# EUROPEAN PATENT APPLICATION

(11) **EP 3 648 028 A1**
(43) Date of publication of application: **06.05.2020**
(21) Application number: 19206027.5
(22) Date of filing: 29.10.2019
(51) Int. Cl.: G06Q 10/08, G06Q 10/06, G06Q 50/28

(54) **METHOD AND SYSTEM FOR CARGO MANAGEMENT**

(30) Priority: 29.10.2018 US 201862751858 P; 06.01.2019 US 201962788937 P
(71) Applicant: Truenorth Systems Ltd, Tel Aviv (IL)
(72) Inventor: LAHAV, Shlomo, 5236483 Ramat-Gan (IL); BEN-AMI, Efrat, 6226625 Tel Aviv (IL)
(74) Representative: Plasseraud IP

(57) **Abstract**

A cargo management system for handling cargo transportation is disclosed. The management system can be configured to obtain information regarding one or more alternative routes of a journey of a cargo-shipping-unit (CSU). The system comprises an operational recommending unit (ORU), which is configured to obtain one or more defined targets that are related to the type of cargo that is carried by the CSU and to present the impact of each alternative route on the probability to reach each of the defined targets.

## Description

### CROSS-REFERENCE TO RELATED APPLICATIONS

This utility patent application being filed in the United States as a non-provisional application for patent under Title 35 U.S.C. § 100 et seq. and 37 C.F.R. § 1.53(b) and, claiming the benefit of the prior filing date under Title 35, U.S.C. §119(e) of the United States provisional application for patent that was filed on Oct.. 29, 2018 and assigned the serial number 62/751,858, which application is herein incorporated by reference in its entirety; and the United States provisional application for patent that was filed on Jan. 06, 2019 and assigned the serial number 62/788,937, which application is herein incorporated by reference in its entirety.

### FIELD OF THE DISCLOSURE

The present disclosure relates to the field of cargo transportation and more particularly to a cargo management system for selecting a route of a journey with a smaller likelihood of a damage of the cargo that could ensue from not fulfilling a defined target for a value of one or more features, which are critical to the condition of the cargo, by taking into account an impact of each alternative route on the probability to reach the defined target.

### DESCRIPTION OF BACKGROUND ART

Data on damages is included into various forms describing a loss (in the present disclosure the terms "loss" and "damage" are used interchangeably). The term "form that describes a loss" (FTDL) refers hereinafter, for example, to a loss notification filed by a cargo owner (or a party with any interest in the transported cargo) against a third party linked to the transporting process, and which might potentially bear liability for any losses or damages inflicted to the cargo during transit. Such third party could be, a carrier, a warehouse owner, a shipper, a consignee, an insurance company or any other third party involved in the transporting process. By the "loss" or "damage" a material change is meant: for example, physical, or mechanical, or chemical, or other technical damage. For example, FTDLs may include damage notified in the binary form, as "no" or "yes", or "0" and "1' for a cargo shipping unit (CSU). This data is different from the monetary value of the damage. The damage data can be obtained from one measurement or several measurements or other experiments. For example, an electrical, or a chemical, or physical, or other technical parameter can be measured or assessed in the experiment. For example, a cargo including computers or other electrical devices can be considered damaged if the computers or other electrical devices lost functionalities or when a visual inspection shows that the computers or other electrical devices are broken into pieces. As another example, a cargo of bananas is damaged if there is a change of color of bananas from green to yellow, where the yellow is defined as in a respective color palette. As yet another example, a cargo can be considered damaged based on an aggregation of a several measurements, for instance, when a change of color of a fruits is corroborated by a temperature log.

Common cargo transportation is implemented by a shipping unit. An example of the cargo shipping unit (CSU) can be a container, an air parcel, etc. A common CSU provides an enclosed space in which physical items can be stored during shipment. A single journey of a CSU can comprise a plurality of segments. In each segment a different entity can be responsible for the safety of the CSU and its cargo.

An example of a journey of a CSU from an origin (such as but not limited to a factory, a warehouse, a retail outlet, etc.) to a destination (such as but not limited to a warehouse, a retail outlet, a customer premises, etc.) can comprise a plurality of segments. Segments such as but not limited to: loading the goods into the CSU at the shipper's platform; loading the CSU on a vehicle such as but not limited to a truck or a train at the shipper's yard; transporting the CSU toward the port or the airport; off-loading the CSU from the truck or the train; storing the CSU at the port or airport; embarking the CSU on the ship or airplane; transporting the CSU by the ship or the airplane; off-loading the CSU from the ship or airplane; temporary storing the CSU in the port (airport); loading the CSU on a truck or a train; transporting the CSU toward the consignee's yard; and off-loading the CSU from the truck to the consignee's platform. In the disclosure (including the claims) the terms origin, shipper and supplier can be used interchangeably and the terms destination, consignee, supplier's customer, or customer can be used interchangeably. In the disclosure the terms a vehicle, a truck, a train, a ship, an airplane, etc. can be used interchangeably.

A person with ordinary skill in the art of cargo transportation can appreciate that some journeys may comprise all the above segments; other journeys may comprise part of those segments; and some journeys may comprise more segments than the ones that are disclosed above. Yet in some journeys the order of the segments can be other than the above disclosed order. It should be noted that the disclosed segments of a journey are not intended to limit the scope of the inventive concepts in any manner.

There are journeys in which different entities are responsible for the safety of the cargo. Each entity can be responsible for one or more segments of a journey. A truck company can be responsible for losses that occur during traveling by a truck. A sea carrier can be responsible for loading the cargo on the ship, losses that occur during the ship traveling or when off-loading the CSU from the ship, etc. Thus, it can be desired to point on one or more segments in which the loss occurred.

In general, a plurality of sensors may be associated with a CSU. In particular, these sensors may be carried by the CSU, and/or they may be carried by the vehicle carrying the CSU. Some of the sensors may be configured to monitor: acceleration, shocks, pressure, temperature, light, humidity, tilt, time. Other sensors can be microphones, magnetic sensors at the doors, etc.. Some of the sensors can be sensitive to two or more parameters. An example of such a combined sensor can be "MultiSensor 6". "MultiSensor 6" can deliver information regarding motion, temperature, humidity, light, vibrations, and ultraviolet light (UV) as well as wireless communication based on Z-Wave protocol." MultiSensor 6" is a trade name of Aeotec Inc USA. Z-Wave protocol is well known to a person with ordinary skill in the art and will not be further disclosed.

### BRIEF SUMMARY

The inventors of the present technique appreciated that the readings of those sensors can be used for estimating location and/or time and/or segment at which the loss will occur or has potentially occurred. Also, the inventors considered that the readings of those sensors can be used for determining (i.e. estimating) whether the loss data is correct: for example, if a FTDL contains correct loss data (i.e. damage data), i.e. if it is a valid form or not (i.e. if this is a form with the correct loss data). Later, such data might be used assist in determining which party might be responsible for the loss, how to improve cargo transportation, etc.

With regard to the correctness of the damage data, this data may originate from measurements or experiments or controls made by a surveyor. For example, a typical surveyor's report can indicate whether the surveyor agrees or disagrees with the damage data in the report of the cargo owner (and the value of the loss or damage). The surveyor's report can be treated as another FTDL. The surveyor may be a person or a robot. This second FTDL may confirm or contradict the cargo owner's, first FTDL. Hence, it is clear that damage data in some cases may be incorrect

Accordingly, there is a need to determine a likelihood that a damage will occur, or has occurred, to a cargo transported in a cargo shipping unit, CSU, in a journey from an origin to a destination. Further, there is a need to determine a likelihood that such a damage has indeed occurred even when there is a data on this damage according to which it has been occurred, and/or data that it has not occurred, since any of this data can be result of an inaccurate measurement or experiment (i.e. this data includes a noise component). Furthermore, there is a need to determine a point or a segment of the journey at which the damage could occur, i.e. to determine a likelihood that a damage has occurred or will occur at a specific point or a segment of the journey.

Example embodiments of the disclosed technique include estimating this likelihood by analyzing data that would be gathered or have been gathered from sensors associated with a CSU carrying a cargo during a journey of such a CSU. Further, some embodiments may further include analyzing damage data (data on the presence or absence of the damage) for this cargo. This data may be obtained, for example, from FTDLs or from absence of FTDLs for this cargo. The analysis can be performed by using relevant information that is stored in one or more databases. Such information may include information on same (and/or similar) journeys (for example, journeys with a same route), same (and/or similar) CSUs, same (and/or similar) goods, same (and/or similar) period of the year, etc.

An example embodiment of the disclosed technique may comprise a Form-Receiving Unit (FRU), a Loss-Analyzer unit (LAU), operational-recommending-unit (ORU), a predicting-model generator (PMG), a risk analyzing unit (RAU) and one or more databases.

An example embodiment of the disclosed technique may be associated with one or more external databases that store general information, which is related to cargo transportation. For convenience and clarity of presentation the present disclosure refers to a plurality of databases, each database can be associated with one or more types of information. However, a person with ordinary skill in the art can appreciate that two or more of those databases may be embodied on one or more physical or virtual media. Such media includes, but not limited to, a read/write hard disc, CDROM, Flash memory, ROM, or other memory or storage devices. In some embodiments, one or more DBs can reside over the Internet cloud.

Some examples embodiments of the disclosed technique may communicate with external databases. Databases such as but not limited to: one or more databases (DB) of journeys, one or more DBs of CSUs, one or more DBs of types of cargo, one or more DBs of sensors, one or more DBs that contain weather information, etc. Such data are examples of "information regarding a route". By this information, technical data is meant. In some embodiments, one or more DBs can reside over the Internet cloud.

Each entry in an example of journey DB can be associated with a course from a shipper to a consignee. In some cases the shipper and/or the consignee premises can be substituted with an appropriate street, city, district, state, etc. depending on the resolution of the current stored data in the journey DB. Some embodiments of the disclosed technique can be configured to improve the resolution of the stored data at the end of each journey. Each course can comprise a plurality of segments. Each segment can be associated with one or more possible carriers. Such data are too examples of "information regarding a route".

An example of CSU DB may store information about features of a plurality of CSUs. Each entry of the CSU DB can be associated with a certain type of CSU. The stored features of each CSU can comprise the material from which the CSU is made, the dimension of the CSU, whether the CSU includes environmental control devices, which sensors are associated with the CSU, whether the CSU is sealed to liquid and/or gas, previous damages, etc. Such data are too examples of "information regarding a route".

Each entry in an example of cargo DB may store features of a certain type of cargo. Features such as but are not limited to sensitivity to shocks, sensitivity to temperature, sensitivity to humidity, sensitivity to water, does it carry liquid, is the cargo explosive, etc. Such data are too examples of "information regarding a route".

Each entry in an example of sensors DB can be associated with a type or a model of a sensor and may comprise the one or more parameters that are measured by the sensor (shock, humidity, temperature, etc.), the sensitivity of the sensor, the range that the sensor can measure, the tolerance of the readings, the sensors' firmware and hardware versions, etc. Such data are too examples of "information regarding a route".

An example of weather DB may store information about the weather according to location, and time. The resolution of the time can be seasons, months, day or even hours. Such data are too examples of "information regarding a route".

Some embodiments of the disclosed technique can be configured to update the stored data or to improve the resolution of the stored data in one or more of the DBs. Other embodiments of the disclosed technique can be configured to update the stored data in the DBs or to improve the resolution of the stored data during a current journey.

In addition to the one or more external databases, some embodiments of the disclosed technique may comprise internal DBs. The internal DBs may store proprietary information. The proprietary information may comprise historical information. Each entry in the historical DB (HDB) can comprise information related to a journey, information related to the cargo, information related to the type of the CSU, etc. In addition, the entry may store an indication whether a FTDL was filed or not. If the FTDL was filed, the related stored information may comprise the type of the damage, the reading of the sensors, etc. In addition, an indication whether a surveyor has found that the loss data in the FTDL has basis, i.e. is valid or not, can be stored too.

An example of a FRU can comprise one or more processors that are embedded in one or more computers. The computer can be Intel NUC, wherein NUC stands for Next-Unit-of-Computing. Other embodiments may use computers such as "Amazon EC2 A1 Instances" or "Amazon EC2 P3 Instances", which are maintained by Amazon Crop USA. Yet, some embodiments of the disclosed technique may use computers such as "General purpose machine type family N1" which is maintained by Google, USA. An example of a FRU can be configured to obtain FTDLs in one or more formats, one or more units, etc. The obtained forms can be converted to a standard format in order to generate a standardized-form-that-describes-loss (SFTDL). Next the FRU may deliver the generated SFTDL to the LAU.

In some embodiments the FRU can be configured to communicate with a person who currently prepares a FTDL. In such embodiment the FRU can be configured to lead the requesting person along the process of filling the one or more FTDLs.

An example of LAU can be a high-end computer that is configured to execute one or more machine learning programs (MLP) in order to recommend whether a form that describes a loss is for a valid loss. A non-limiting example of a powerful computer can be "Amazon EC2 P3 Instances" maintained by Amazon Corp or "General purpose machine type family N1" which is maintained by Google, USA, etc. A non-limiting example of an MLP can be based on "TensorFlow" maintained by Google Brain Team USA, etc.

Other embodiments of the disclosed technique may use predictive algorithm such as but not limited to logistic regression, linear regression, decision tree, random-forest, etc. in order to generate a predictive function that can be used to predict the probability that damage may occur in a certain journey. In such embodiment the LAU can be configured to calculate the predicted probability for occurrence of the damage and compare it to a certain threshold. If the value of the predicted probability is higher than the threshold, then the FTDL can be assessed as containing correct damage data (a valid form); otherwise the FTDL can be marked as an uncertain or suspicious case. Some embodiment of the disclosed technique may select the value of the threshold from a range of 30% to 60%. An example value of the threshold can be 50% probability that the relevant damage may occur. In the disclosure the terms "a valid form", "a justified form" and "form for occurred damages" can be used interchangeably.

From time to time, every few weeks, one to ten weeks for example, an example of LAU can be configured to activate a machine-learning program (MLP) in order to scan the stored data in the historical database and to deliver an updated predicting model. The updated predicting model can predict the probability that a certain FTDL is a valid form. This information can be added to the FTDL before transferring the form to a surveyor, and it can be used to be used as an additional tool in preparing his, her or its report. Some example embodiment of the disclosed technique may use a classifier model instead of a predicting model. In the present disclosure, the terms predicting model and classifier model can be used interchangeably.

Some example embodiments of the disclosed technique may be configured to deliver operational recommendations based on the data that is stored in the history DB. Such embodiments may comprise an ORU. A shipper or a carrier that needs to deliver a certain cargo from point A to point B may load to the ORU information regarding the type of the cargo, the location of the origin and the destination, the requested date, requested cost, etc. The ORU may process the information in view of similar journeys that are stored in the history DB and may deliver recommendation how to deliver the relevant cargo with a minimum risk for damage. Some embodiments may estimate also the duration of a journey along a recommended path. The recommendations can refer to the type of CSU, the route of the journey, recommended carriers, ports, etc.

Some example embodiments of the disclosed technique may be configured to process the stored data in the history DB and deliver a risk model. In such embodiments a risk analyzer unit (RAU) can associate a risk factor to one or more carriers, one or more types of CSUs, one or more segments, etc. At the end of processing the relevant information from the historical DB, an example of a RAU can estimate the probability for damage along a certain journey. Based on the risk report a shipper or a carrier can determine which routes to select, which carrier, etc. In the present disclosure the terms "route of a journey" and "plan of a journey" can be used interchangeably.

An example of predicting-model generator (PMG) can operate in two modes of operation, learning mode and ongoing mode. The learning mode can be executed after the initialization of the PMG and when the historical DB contains sufficient data to enable the MLP to start preparing a predictive model. During the learning mode new predictive models can be produced. The ongoing mode can be executed after the learning mode while using the generated predictive models. During the ongoing mode an example of PMG can be configured to monitor and to tune one or more existing predictive models.

During the learning mode a number of journeys can be sampled by the PMG in order to define new predictive models. During the ongoing mode the predictive model can be updated.

The foregoing summary is not intended to summarize each potential embodiment or every aspect of the present disclosure, and other features and advantages of the present disclosure will become apparent upon reading the following detailed description of example embodiments with the accompanying drawings and appended claims.

Furthermore, although specific example embodiments are described in detail to illustrate the inventive concepts to a person skilled in the art, such embodiments can be modified to various modifications and alternative forms. Accordingly, the figures and written description are not intended to limit the scope of the inventive concepts in any manner.

Other objects, features, and advantages of the present invention will become apparent upon reading the following detailed description of the disclosed embodiments with the accompanying drawings and appended claims.

### BRIEF DESCRIPTION OF THE DRAWINGS

Exemplary embodiments of the present disclosure will be understood and appreciated more fully from the following detailed description, taken in conjunction with the drawings in which:
Fig. 1 illustrates a simplified block diagram with relevant elements of an example of a cargo management system that operates according to the disclosed technique;
Figure 2 schematically illustrates a flowchart showing relevant processes that can be implemented for collecting data to be stored in a historical database;
Figure 3 schematically illustrates a flowchart showing relevant processes that can be implemented by an example predicting-model generator (PMG) for generating a predicting model that can predict whether there is a basis for filing a FTDL (and consequently that such a form will be filed);
Figure 4A schematically illustrates a flowchart showing relevant processes that can be implemented by an example of LAU for analyzing whether a filed FTDL is valid (i.e. correctly reflects the technical state of the cargo with regard to damage) and indicating on one or more suspected segments of the journey in which the damage might happen;
Figure 4B schematically illustrates a flowchart showing relevant processes that can be implemented by an example of LAU for defining one or more causes for the damage related to a valid form;
Figure 4C schematically illustrates a flowchart showing relevant processes of another method that can be implemented by an example of LAU for defining one or more causes for the damage related to a valid form.
Figure 5A schematically illustrates a flowchart showing relevant processes that can be implemented by an example of operational-recommending-unit (ORU) for calculating the impact of each Parameter of Interest (POI) between an origin and a destination of a certain journey;
Figure 5B schematically illustrates a flowchart showing relevant processes that can be implemented by an example of operational-recommending-unit (ORU) for recommending how to handle a certain cargo independently of the route;
Figure 6 schematically illustrates a flowchart showing relevant processes that can be implemented by an example ORU for supporting a decision maker to select a certain plan of a journey; and
Figure 7 schematically illustrates a flowchart showing relevant processes that can be implemented by an example method for determining the risk that is associated with a certain cargo in a certain journey.

### DETAILED DESCRIPTION OF EXEMPLARY EMBODIMENTS

The disclosed technique can be implemented in numerous ways, including as a process; an apparatus; a system; a computer program product embodied on a computer readable storage medium; and/or a processor, such as a processor configured to execute instructions stored on and/or provided by a memory device coupled to the processor.

In this specification, these implementations, or any other form that the invention may take, may be referred to as techniques. In general, the order of the steps of disclosed processes may be altered within the scope of the invention. Unless stated otherwise, a component such as a processor or a memory device described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims, and the invention encompasses numerous alternatives, modifications, and equivalents. Numerous specific details are set forth in the following description in order to provide a thorough understanding of the invention. These details are provided for the purpose of example, and the invention may be practiced according to the claims without some or all of these specific details. For the purpose of clarity, technical material that is known in the technical fields related to the invention has not been described in detail so that the invention is not unnecessarily obscured.

In the following description, the words "unit," "element," "module" and "logical module" may be used interchangeably. Anything designated as a unit or module may be a stand-alone unit or a specialized or integrated module. A unit or a module may be modular or have modular aspects allowing it to be easily removed and replaced with another similar unit or module. Each unit or module may be any one of, or any combination of, software, hardware, and/or firmware, ultimately resulting in one or more processors programmed to execute the functionality ascribed to the unit or module.

Additionally, multiple modules of the same or different types may be implemented by a single processor. Software of a logical module may be embodied on a computer readable device such as a read/write hard disc, CDROM, Flash memory, ROM, or other memory or storage devices, etc. In order to execute a certain task a software program may be loaded to an appropriate processor as needed. In the present disclosure the terms task, method, process can be used interchangeably. In the present disclosure the verbs transmit, transfer or be placed in a queue can be used interchangeably.

Turning now to the figures in which like numerals represent like elements. The purpose of the drawings is to describe example embodiments and not for production. Therefore features shown in the figures are chosen for convenience and clarity of presentation only. Moreover, the language used in this disclosure has been principally selected for readability and instructional purposes, and may not have been selected to delineate or circumscribe the inventive subject matter, resort to the claims being necessary to determine such inventive subject matter.

Reference in the specification to "one embodiment" or to "an embodiment" means that a particular feature, structure, or characteristic described in connection with the embodiments is included in at least one embodiment of the invention, and multiple references to "one embodiment" or "an embodiment" should not be understood as necessarily all referring to the same embodiment.

Although some of the following description is written in terms that relate to software or firmware, embodiments may implement the features and functionality described herein in software, firmware, or hardware as desired, including any combination of software, firmware, and hardware.

Additionally, multiple modules of the same or different types may be implemented by a single processor. Software of a logical module may be embodied on a computer readable memory device such as a read/write hard disc, CDROM, Flash memory, ROM, or other memory devices or storage devices, etc. In order to execute a certain task a software program may be loaded to an appropriate processor as needed. In the present disclosure the terms task, method, and process can be used interchangeably.

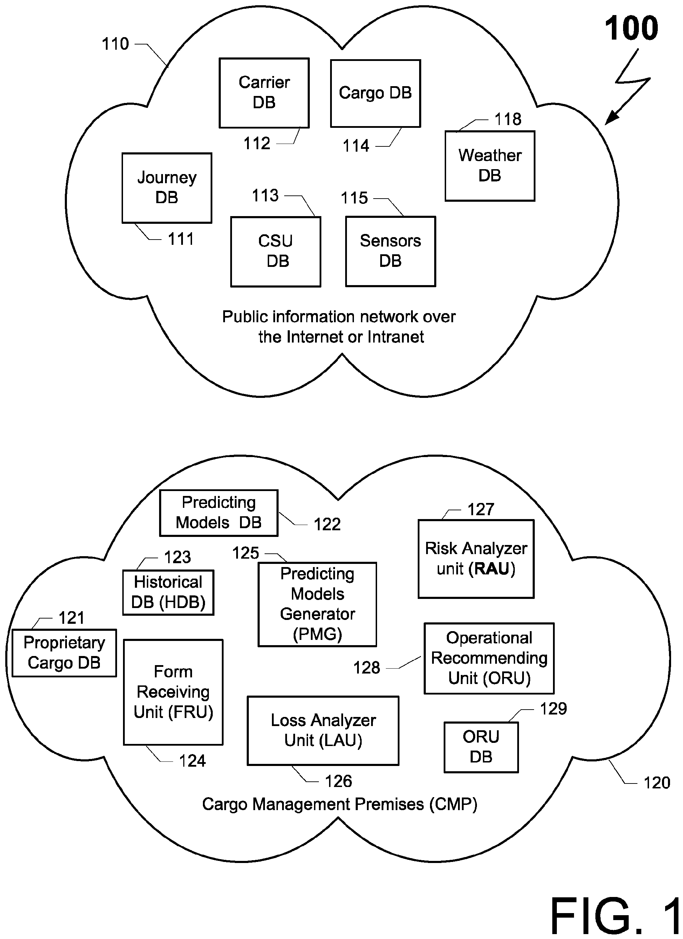

**FIG. 1** depicts a simplified block diagram with relevant elements of an example of a cargo management system (CMS) **100** that operates according to an example embodiment of the disclosed technique. An example of CMS **100** may comprise a public information network **110** and a proprietary information network **120.** The public information network **110** can reside over the Internet, or over a plurality of Intranets (domains) of different entities. The different entities may comprise entities that deliver containers, shipping services, etc.

An example of public information network **110** can comprise a journey DB **111,** a carrier DB **112,** a CSU DB **113,** a cargo DB **114,** a sensors DB **115** and weather DB **118.** Other example of public information network **110** may comprise part of those DBs or additional DBs, such as but not limited to a shipper's DB (not shown in the figures). The shipper DB may store information related to a certain shipper. Information such as location, type of vehicle, previous demands for loss, payment history, loading platform properties, etc.

Each entry in an example of journey DB **111** can be associated with a course from a shipper to a consignee. In some cases, the shipper and/or the consignee premises can be substituted with an appropriate street, city, district, state, etc. depending on the resolution of the current stored data in the DBs. Some embodiments of the disclosed technique can be configured to improve the resolution of the stored data at the end of each journey.

Each course can comprise a plurality of segments. Each segment can be associated with one or more possible carriers. Further, for each segment there can be stored a history of related FTDLs (for example, FTDLs that were filed for journeys including this segment; and, optionally, FTDLs that were filed for journeys having a segment similar to this segment). The DB storing this history is therefore a historical database (HDB). The history may include a percentage of the related FTDLs for which the likelihood of that they were correct, with damage occurring in this segment (or, alternatively, with damage occurring in the whole journey) was above a threshold (for example, including FTDLs marked as valid by surveyors). Also, the history may store data for calculating this percentage, and re-calculating it when data for a further journey is added to the history. In particular, the history may include counters for each segment, for a particular type of cargo, type of CSU, a set of sensors, weather conditions, etc. Also, the history may include counters for journeys for which damage has not been found: for each segment, for a particular type of cargo, type of CSU, a set of sensors, weather conditions, etc. Thus, analyzing the data that is stored in the journey DB **111** may provide a basis for estimating the risk associated with a certain course or a segment.

An example of carrier DB **112** may comprise information related to a plurality of carriers. Each entry in the carrier DB **112** may comprise information related to a certain carrier. The carrier can be a sea-carrier, an air-carrier, a train company, a truck company, etc. The information may comprise sizes limitations of CSUs that can be handled by that carrier, weight limitations, scheduling information, possible routes, history of FTDLs that were filed against this carrier and whether the FTDLs were correct or not, etc.

CSU DB **113** may store information about a plurality of types of CSUs. Each entry in an example of CSU DB **113** may store information about features of a certain type of CSU. The information may comprise features such as but not limited to the material from which the CSU is made, the dimension of the CSU, whether the CSU includes climate control devices, which sensors are associated with the CSU, whether the CSU is sealed to liquid and/or gas, previous damages, historical filed FTDLs that are related to that CSU, etc.

Cargo DB **114** may store information related to a plurality of types of cargo. Each entry in an example of cargo DB **114** may store features of a certain type of cargo. Features such as but not limited to cost, sensitivity to shocks, sensitivity to vibrations (amplitude and frequency), sensitivity to temperature, sensitivity to humidity, sensitivity to water, does it carry liquid, is the cargo explosive, etc.. In addition, cargo DB **114** may store information regarding the packaging of the cargo, is it boxes with the dimension and weight of each box. Is the cargo powder inserted in sacks, etc..

Sensors DB **115** may store information related to a plurality of types of sensors. Each entry in an example of sensors DB **115** can be associated with a type or a model of a sensor and may comprise the one or more parameters that are measured by the sensor (shock, humidity, temperature, etc.), the sensitivity of the sensor, the range that the sensor can measure, the tolerance of the readings, the sensor hardware version, and the sensor software version, etc.

Weather DB **118** may store information related to the weather in a plurality of locations and routes as well as in a plurality of periods of the year. An example of DB **118** can be arranged as a two-dimensional matrix. The first axis can be associated with a location, a segment along a certain route, etc. The second axis can associate with the month. Each cell, at a junction of a certain location and a certain month, may include information regarding the weather, the lighting hours, the probability for a storm, etc. Other example embodiments of DB **118** may use other resolution per one or more axis of the matrix. In other examples the resolution of the time axis can be expressed in days and not in months, etc.

Referring now to the Cargo-Management-Premises (CMP) **120.** CMP **120** can be a private domain of an insurance company or a private domain of a certain shipper, etc. An example of CMP **120** may comprise one or more private DBs and one or more processing devices. An example of CMP **120** may comprise: Proprietary-cargo DB **121,** Predicting models DB **122,** historical DB (HDB) **123,** and operational-recommending-unit (ORU) DB **129.** In addition, an example of CMP **120** may comprise few examples of processing devices, devices such as but not limited to: FRU **124,** Predicting-models generator (PMG) **125,** Loss-Analyzer unit (LAU) **126,** Risk-analyzer unit (RAU) **127,** and Operational-recommending unit (ORU) **128.**

An example of the Proprietary-cargo DB **121** may store proprietary information regarding types of cargo. Each entry in an example of DB **121** may store features of a certain type of cargo. Features such as but not limited to cost, sensitivity to shocks, sensitivity to vibrations (amplitude and frequency), sensitivity to temperature, sensitivity to humidity, sensitivity to water, does it carry liquid, is the cargo explosive, etc. In addition, each entry may comprise proprietary information which is related to FTDLs that were filed in relation to the relevant type of cargo. Information such as but not limited to how many FTDLs were filed for this type of cargo, the percentage of journeys in which a FTDL was filed related to this type of cargo, etc.

The historical DB (HDB) **123** may store information that was gathered during the years of operational of the owner of the domain **120.** The HDB **123** can be used for building predicting models that can predict (i.e. determine or likelihood) that there will be a damage along a certain journey (and, accordingly, that a FTDL will be filed). Each entry in the HDB **123** can comprise information related to a journey from an origin to a destination, information related to the type of cargo and the target features of that cargo, information related to the type of the CSUs, information regarding the segments of the relevant journey, information regarding different carriers that are used along the journey, information regarding the vehicle that is used, etc. For example, each entry in HDB **123** may contain at least one of data acknowledging the damage and data acknowledging absence of the damage of the cargo in the journeys, where this data has a respective likelihood to be correct; the type of the CSU; the type of the cargo carried by the CSU; and data gathered from an at least one of sensors associated with the CSU during the journey.

The likelihood for the data acknowledging the damage or for the data acknowledging absence of the damage of the cargo may be, but does not have to be explicitly stored. For example, an additional or alternative way is to store an indication whether a FTDL was filed or not for the journey, in some or all entries in HDB **123.** If a FTDL was filed, then the related stored information may comprise (besides the indication that the occurrence of damage was detected) the type of the damage. In addition, an indication whether a surveyor has found the loss in the filed FTDL as a valid loss or not (and what is the relevant value of the loss or damage) may be stored in HDB **123.**

Additionally or alternatively, HDB **123** can have entries with counters, for relevant segments or whole routes (see the example with relevant counters above).

Periodically, the HDB **123** can be updated with information that was gathered during the current period of time. Further, the information that is stored in the HDB **123** can be used for producing or updating one or more predicting models that can predict the probability that there will be an occurrence of damage (and, consequently, that an FTDL will be therefore filed) in a future same, similar or relevant journey. In the disclosure the terms "similar" or "relevant" can be used interchangeably.

An example of predicting-models-DB **122** may store a plurality of predicting models that were produced by PMG **125.** Each predicting model can be used for calculating the probability for damage along a certain journey. The parameters that can be used in a predicting model can refer to the type of cargo, the type of CSU, the carrier, the course, segments in the course, the date, etc. The stored predicting models can be used by one or more of the processing units of CMP **120.**

An example of ORU DB **129** may store a plurality of operational recommendations to be used by the owner of the CMP **120** or any authorized party. Each entry in the ORU DB **129** may store recommendation that can be used for planning a certain journey of a certain type of cargo. The recommendation can point on a certain carrier, a certain route from the origin to destination, the predicted duration of each route, a recommended location on the ship, recommended price for such combination of routes, carrier and cargo type, etc.

An example of FRU **124** can comprise one or more processors that are embedded in one or more computers. The computer can be Intel NUC, wherein NUC stands for Next-Unit-of-Computing. Other embodiments of the disclosed technique may use computers such as "Amazon EC2 A1 Instances" or "Amazon EC2 P3 Instances", which are maintained by Amazon Crop USA. Yet, other example embodiments may use computers such as "General purpose machine type family N1" which is maintained by Google, USA, etc.

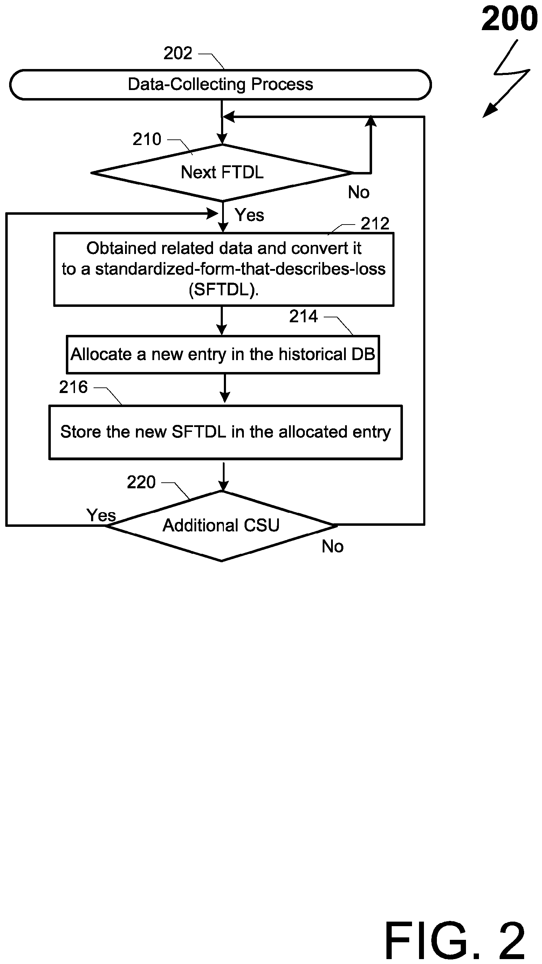

An example FRU **124** may be configured to obtain FTDLs submission in one or more formats, one or more units (kilogram, tons, pound, dollars, yen, kilometer, mile) etc. The obtained submissions can be converted to a standard format in order to produce a standardized-form-that-describes-loss (SFTDL). Next the FRU **124** may deliver SFTDL to a queue of the LAU **126.** More information regarding an example process for data collecting by an example of FRU **124** is disclosed below in conjunction with FIG. 2

From time to time, every few weeks one to ten weeks for example, an example of PMG **125** can be configured to activate a machine-learning program (MLP) in order to scan the stored data in the HDB **123** and to deliver an updated predicting model to be stored in the predicting models DB **122.** The updated predicting model can predict the probability that a filed FTDL is for damage that actually occurred.

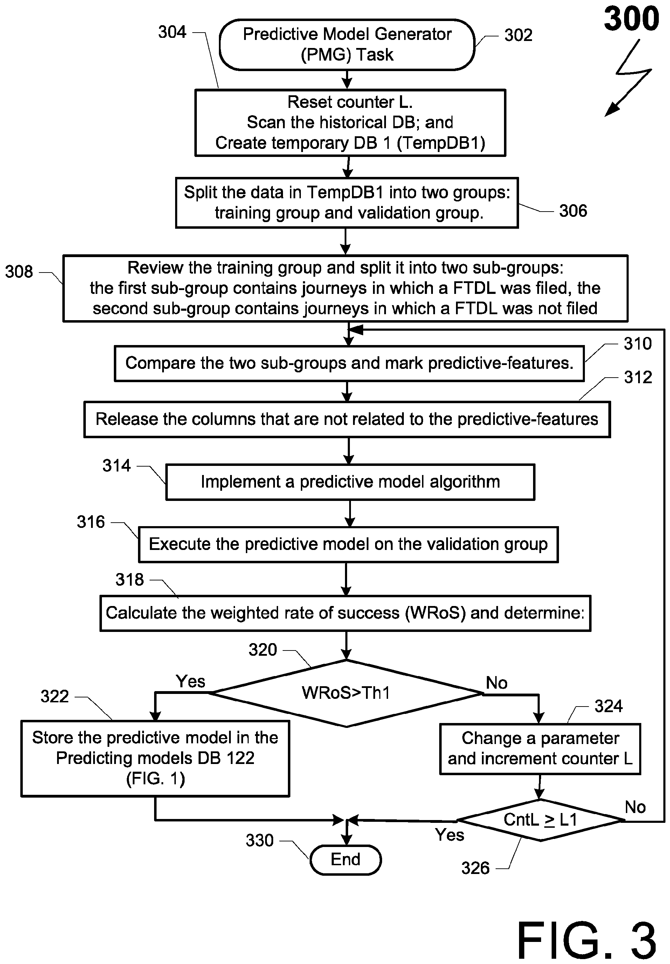

An example of predicting-model generator (PMG) **125** can operate in two modes of operation, learning mode and ongoing mode. The learning mode can be executed after the initialization of the PMG **125** and when the HDB **123** contains sufficient data to enable an example of an MLP to start preparing a predicting model for a certain journey and a certain type of cargo. Example embodiments of PMG **125** may use predictive algorithm such as but not limited to logistic regression, linear regression, decision tree, random-forest, etc. in order to create a predictive function that can be used to predict the probability that damage will occur in a certain journey. More information regarding the operation of PMG **125** is disclosed below in conjunction with **FIG. 3****.**

The ongoing mode of PMG **125** can be executed after the learning mode and may monitor and fine-tune one or more existing predictive models that are stored in predicting model DB **122.** An example of PMG **125** can be implemented by a processing unit such as Intel NUC, or "Amazon EC2 A1 Instances" or "Amazon EC2 P3 Instances", etc.

An example of LAU **126** can be implemented by a processing unit. The processing unit may comprise one or more high-end computers, such as but not limited to "Amazon EC2 A1 Instances" or "Amazon EC2 P3 Instances", which are maintained by Amazon Crop USA, for example. Other embodiments of LAU **126** may comprise computers such as but not limited to "General purpose machine type family N1" which is maintained by Google, USA, etc. An example of LAU **126** may be configured to execute one or more MLPs for analyzing SFTDL obtained from the FRU **124,** and recommending whether the loss that is related to the obtained form is valid or not. Some embodiments of LAU **126** may recommend also the value of the loss. A non-limiting example of a MLP can be based on "TensorFlow" maintained by Google Brain Team USA, etc.

In some embodiments the LAU **126** can be configured to scan the predicting models DB **122** looking for a valid predicting model that can apply to a current case. If a valid model does not exist, then the LAU **126** may request the PMG **125** to prepare such a predictive model.

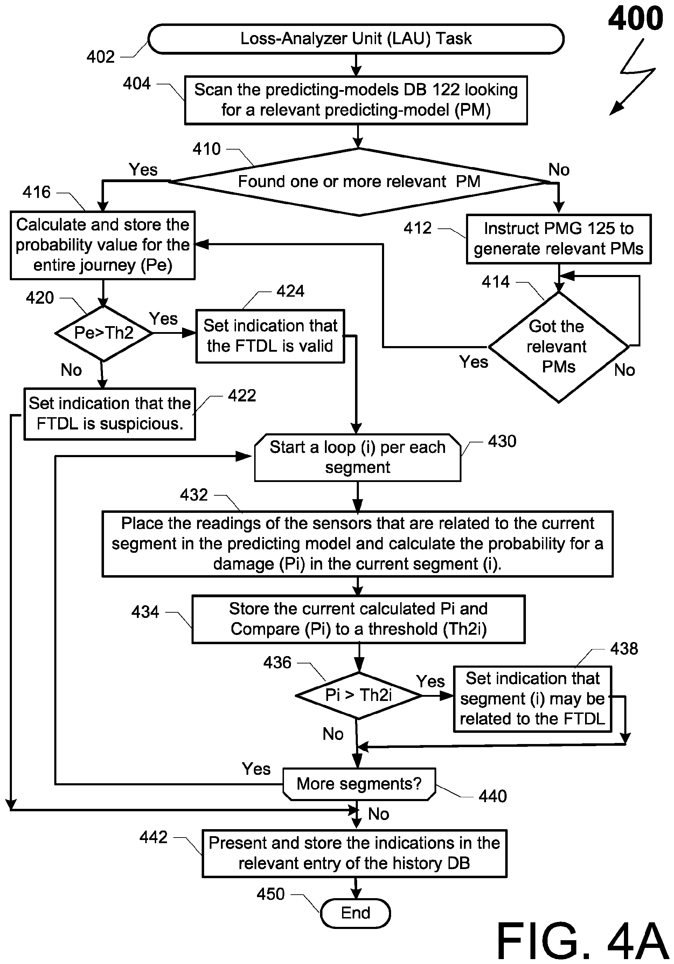

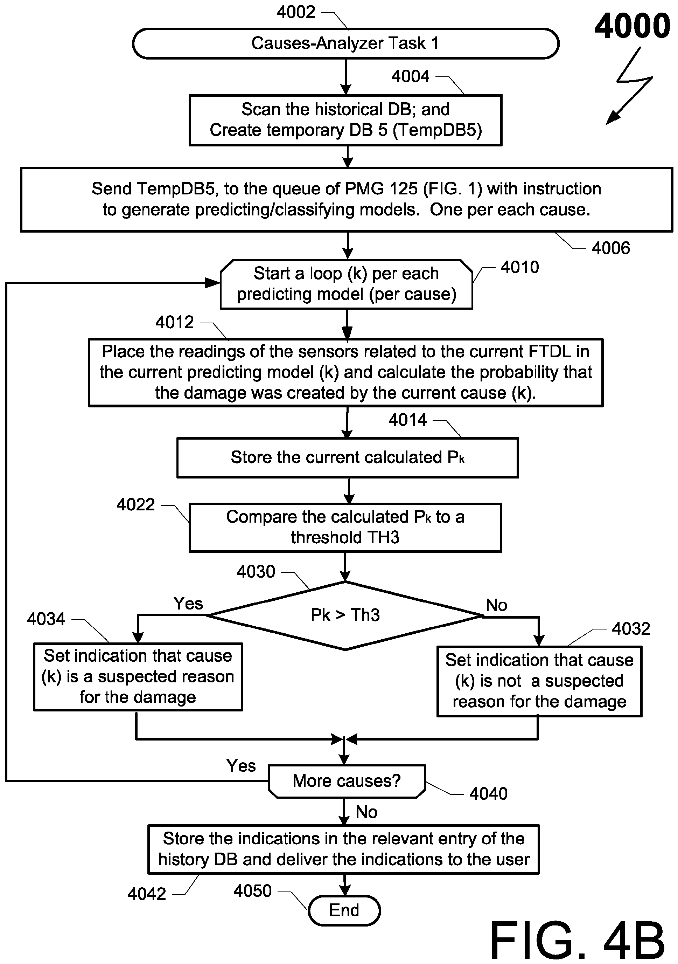

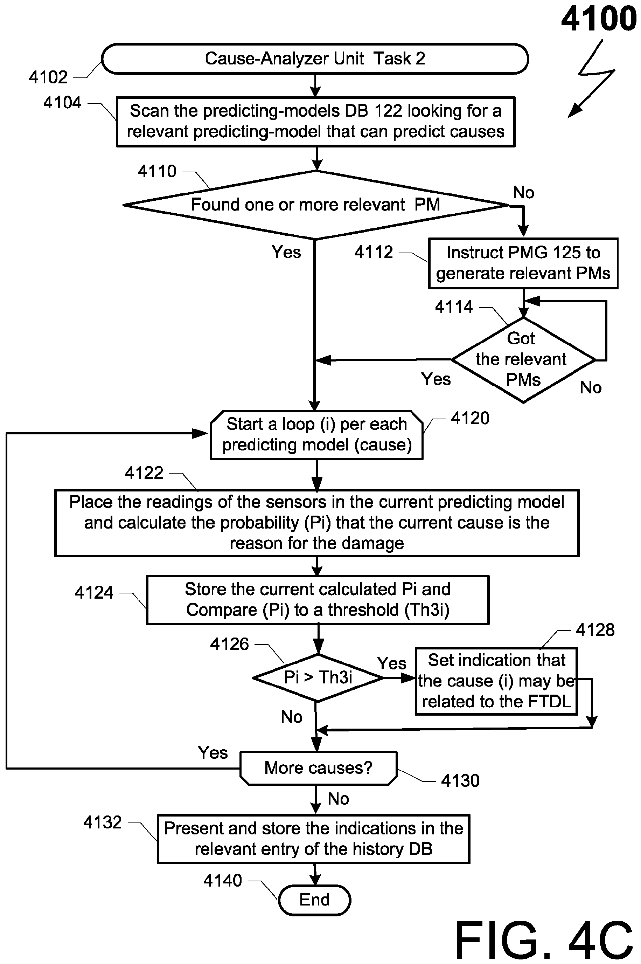

Upon obtaining an appropriate predicting model, LAU **126** may calculate the predicted probability of damage and compare it to a certain threshold. The value of the calculated predicted probability points on the likelihood that the loss indicated in the obtained form is for occurred damages. If the value of the predicted probability is higher than the threshold, then the FTDL is correct (and can be marked as a valid FTDL), otherwise the obtained form can be marked a suspicious form. Some embodiments of the disclosed technique may select the value of the threshold from a range of 30% to 60%. More information about the operation of LAU **126** is disclosed below in conjunction with FIG. 4. Along the disclosure and the claims the terms "the value of the probability" and "the likelihood" can be used interchangeably.

The recommendation of the LAU **126** can be added to the SFTDL before transferring the SFTDL to a surveyor to be used as additional tool (data) while preparing his, her or its report. Some example embodiment of LAU **126** may use a classifier model instead of a predicting mode. Along the present disclosure the claims the terms predicting mode and classifier model can be used interchangeably.

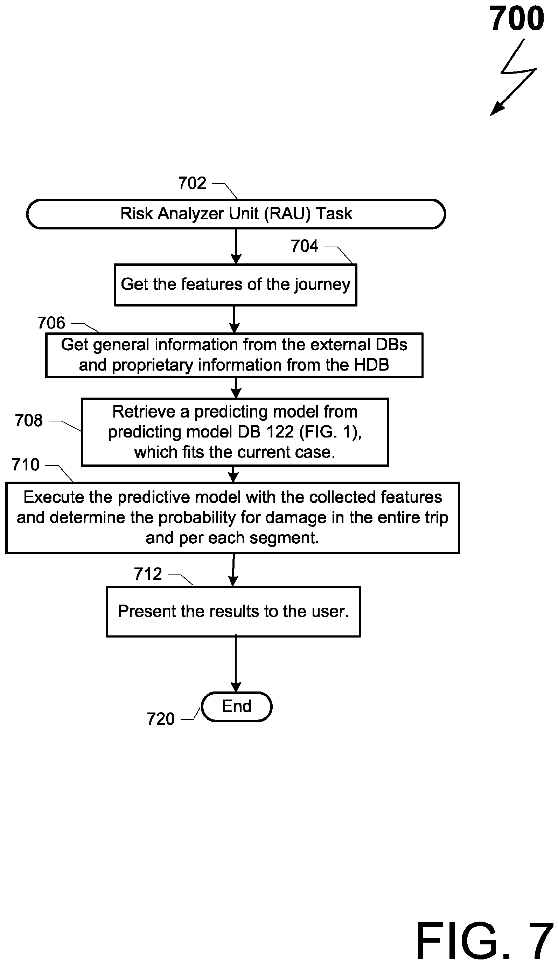

Some example embodiments of the risk analyzing unit (RAU) **127** can be configured to process the stored data in the HDB **123** and deliver one or more predicting models that can be used for predicting the probability for damage along a certain journey for a certain type of cargo at a certain period of the year. In such embodiments the risk analyzer unit (RAU) **127** can associate a risk factor to one or more carriers, one or more types of CSUs, one or more segments, etc.. Based on the risk factor or a risk report a shipper can determine via which route to transfer the shipment and by which carrier. In addition the shipping cost can be calculated in view of the risk factor, etc. An example of RAU **127** may be implemented by a processing unit. The processing unit may comprise one or more high-end computers such as but not limited to "Amazon EC2 A1 Instances" or "Amazon EC2 P3 Instances", which are maintained by Amazon Crop USA, for example. More information about the RAU **127** is disclosed below in conjunction with FIG. 7.

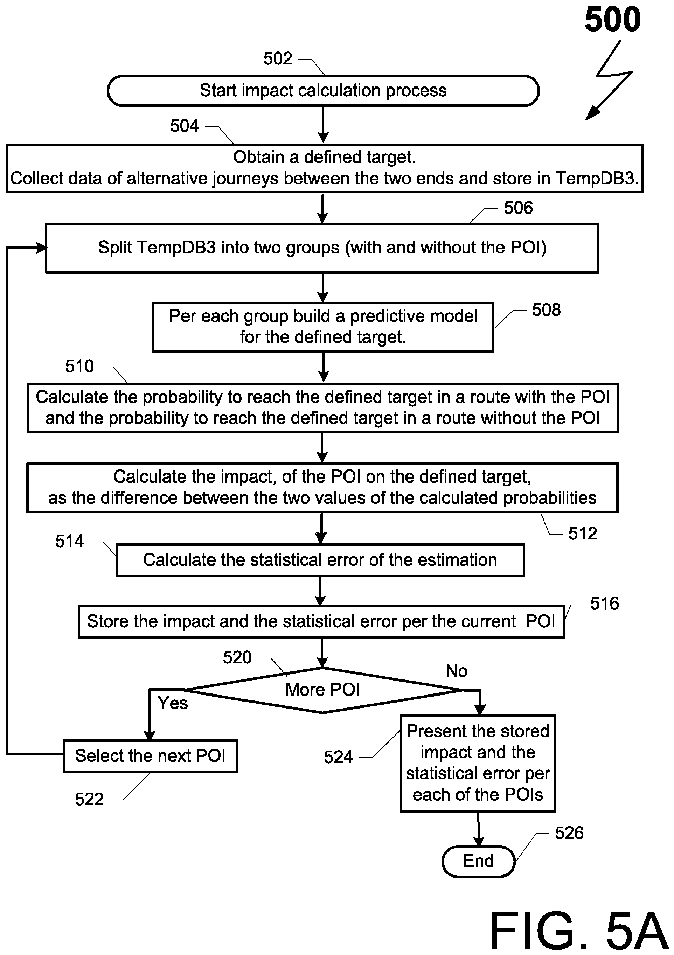

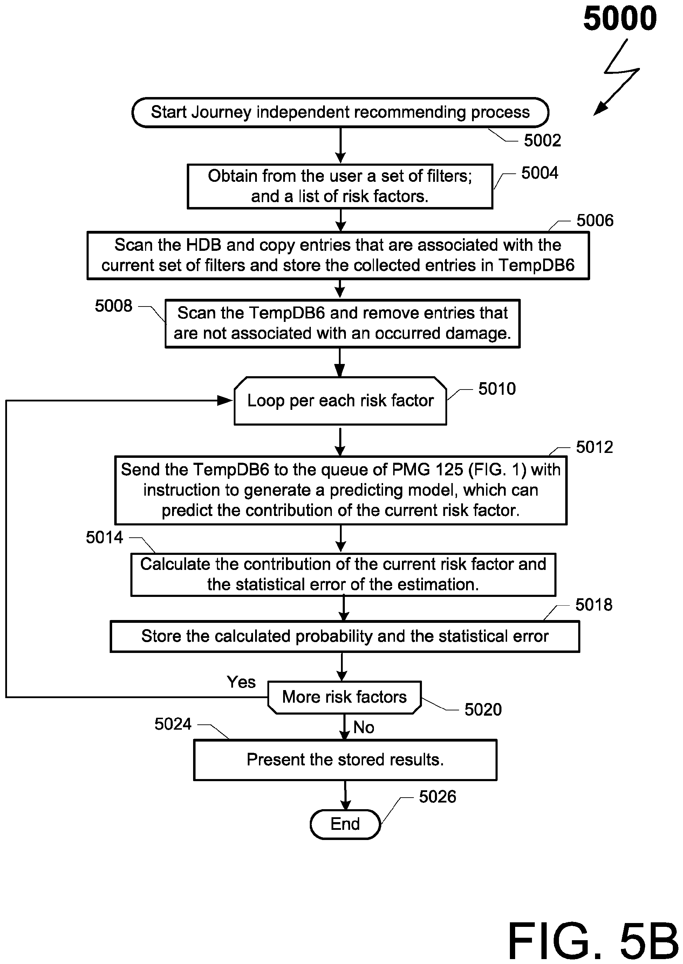

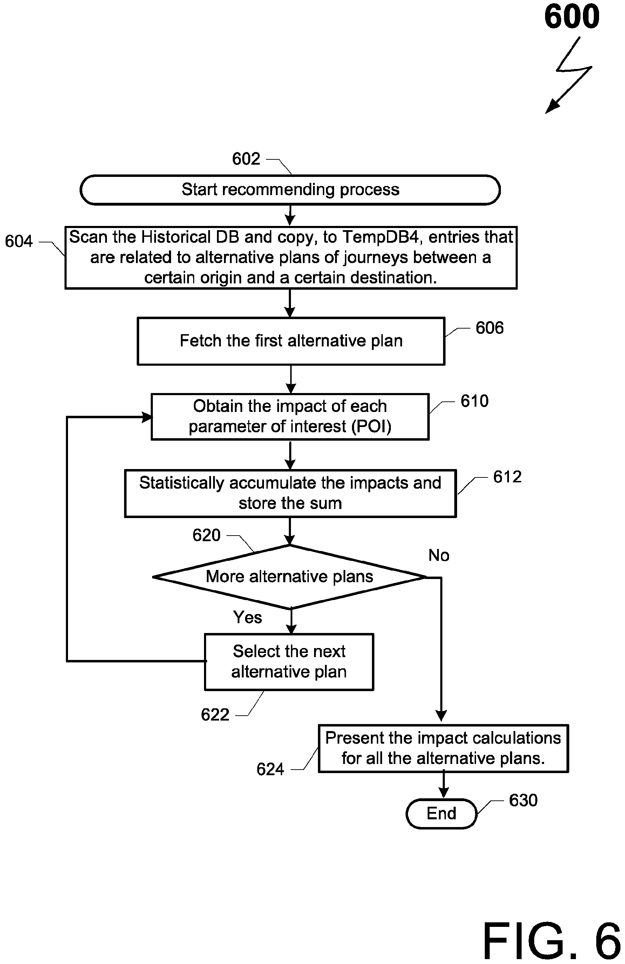

An embodiment of ORU **128** may be configured to deliver operational recommendations based on the data that is stored in the HDB **123.** A shipper that needs to deliver a certain cargo from an origin to a destination may deliver to the ORU **128** the type of the cargo, the origin location and destination, the requested date, requested cost, etc. The ORU **128** may process the information in view of relevant journeys that are stored in the HDB **123** and may deliver recommendation how to deliver the relevant cargo with a minimum risk for damage. The recommendations can refer to the type of CSU, the route of the journey, recommended carriers, ports, recommendations where to put the CSU in a ship, etc. An example of ORU **128** may be implemented by a processing unit. The processing unit may comprise one or more high-end computers such as but not limited to "Amazon EC2 A1 Instances" or "Amazon EC2 P3 Instances", which are maintained by Amazon Crop USA, for example. More information about the operation of examples ORU **128** is disclosed below in conjunction with FIG. 5 and FIG. 6. In the present disclosure and the claims the terms: memory, a memory device, a storage device, a computer readable device, etc. can be used interchangeably.

Referring now to FIG. 2 that illustrates a flowchart showing relevant actions of method **200.** An example of method **200** can be implemented by FRU **124** for collecting data of a new case to be stored in a historical database (HDB) **123.** Later, the entry can be updated with the decision of the LAU **126** about the damage, as it disclosed below in conjunction with FIG. 4 block **436.** Method **200** can be initialized **202** after power on, and may run in a loop as long as the FRU **124** is active.

After initiation **202** process **200** may wait **210** to obtain a next FTDL. The obtained form can comprise information such as but not limited to: date, cargo type; origin, destination, number of segments, per each segment: date origin, destination, carrier, loss Y/N; reading of the sensors, the decision of a surveyor that checked the FTDL, the cause of damage, etc. However, similar features of different forms can be expressed in different units. Therefore, the FRU **124** may convert **212** the obtained form into an SFTDL.

An example of SFTDL can be a matrix in which the columns can be related to: locations (origin, destination), parameter of interest (POI), segments of the journey, carriers, time, type of CSU, a column per each associated sensor, a column that indicates whether a FTDL was filed, the value of the loss, the decision of a human surveyor etc.. The lines in the matrix can be associated with relevant CSUs. The POI can be the origin, destination, ports along the way, warehouses, cost of journey etc. The POI can be a technical parameter. For example, it can be a location or a set of locations along alternative routes between the origin and the destination, a routing path, a set or a certain temperature, a duration of the journey.

Similar parameters (features) in the SFTDL are expressed by the same units. Following are a few examples: the temperature can be presented in Celsius degrees; weight can be presented in Kilogram. Meter per second squared can be used for acceleration, etc. Columns that are associated to missing features can be remained empty.

Next, a new entry in the HDB **123** can be allocated **214** by FRU **124** and the new SFTDL can be stored **216** in that entry. At block **220** a decision is made whether additional CSU is included in the current form of the FTDL. If **220** yes, then process **200** returns to block **212** for handling the next CSU. If **220** there are no additional CSUs, then process **200** may return to block **210** for handling the next FTDL or may wait **210** to obtain a new FTDL.

**FIG. 3** illustrates a flowchart with relevant processes of an example method **300.** Method **300** can be implemented by PMG **125** (FIG. 1) for generating a predictive model. Method **300** can be initialized **302** upon getting a request from LAU **126** (FIG. 1), for example. The requested predictive model can be used for predicting the probability that a loss that is disclosed in a certain FTDL is justified (is valid), for example.

In order to generate a predictive model, an example of PMG **125** (FIG. 1) may search the HDB **123** (FIG. 1) looking for entries that are related to FTDLs that were filed for journeys, which is substantially relevant to the journey that is related to the certain FTDL, as it is disclosed below in conjunction of block **412** FIG. 4A. A predictive model can be generated taking into consideration the cargo, properties of the journey, of the location on the vehicle, period of the year, etc.

At block **304** method **300** may reset a counter that counts the number of loops that are executed by PMG **126** in order to generate a predictive model. This counter can be referred as counter L (CntL), thus at block **304** the value of CntL is set to zero. Next PMG **126** may scan **304** the HDB **123** (FIG. 1) looking for entries that are related to relevant journeys. The similarity or relevancy can be based on locations, segments, carriers, type of cargo, dates, weather, etc. Those entries are copied **304** to a temporary database 1 (TempDB1).

It should be noted that a person having ordinary skill in that art will appreciate that copy of relevant entries from the HDB **123** (FIG) to a temporary DB can be done by just storing a link for a relevant entry in the HDB in an appropriate entry of the temporary DB.

Next the PMG **125** can split **306** the TempDB1 into two groups, a training group and a validation group. Usually the training group has more entries than the validation group. An example of a training group can have 70% to 99% of the entries of TempDB1. A common training group can have the oldest 90% of the entries of TempDB1.

At block **308** the training group can be divided into two sub-groups. The first sub-group can comprise journeys (entries of TempDB1) in which a FTDL was filed. The second sub-group can comprise journeys (entries of TempDB1) in which a FTDL was not filed. Next, process **300** may initiate a loop from block **310** to block **326.** Each cycle of the loop is used to build a predictive model and checking it.

At block **310** the two sub-groups are compared in order to mark one or more predictive-features. The predictive-features are features (columns in the first sub-group) having values that are substantially dissimilar from the values of the same features in the other sub-group. Features that emphasis the variance between the two sub-groups. Next, the features (columns) that are not marked as predictive-features can be released **312** from the two sub-groups. Examples of predictive-features may comprise temperature and humidity in related CSUs; ranges of acceleration and duration, range of vibration, etc.

At block **314** PMG **125** may execute a predictive model algorithm that process the data in the two sub-groups in order to build a predictive model. Algorithms such as but not limited to logistic regression, linear regression, decision tree, random forest, etc. Then, at block **316** the generated predictive model can be executed on the validation group and the weighted rate of success (WRoS) can be calculated **318.** The rate of success can be calculated by counting the number of journeys, from the validation group, in which the predicting model succeeded in predicting that a damage occurred (and a FTDL would be filed) divided by the amount of journeys that are included in the validation group. The WRoS takes into consideration the relation between the sizes of each sub-group (the size of the sub-group in which a FTDL was filed and the size of the sub-group in which a FTDL was not filed).

Next, a decision is made **320** whether the value of WRoS is greater than the value of a first threshold (Th1). Th1 can be a parameter in the range above few tens of percentages, above 40% for example. An example value of Th1 can be 65%. If the WRoS is higher than Th1, then the generated predicting model can be considered as a valid model and be stored **322** in the predicting model DB **122** (FIG. 1) and process **300** can be terminated **330.**

If the value of WRoS is smaller or equal to Th1, then the value of one or more parameters can be changed **324.** The parameters can comprise the value of Th1, the size of each sub-group the value of L1, etc. In addition, CntL can be incremented **324** by one and a decision can be made **326** whether the value of CntL is greater or equal to a threshold L1. L1 can represent the maximum number of loops that can be implemented in order to define a predicting model. L1 can be in the range of two to five loops for example. A common value of L1 can be 3 times.

If **326** the value of CntL is equal or greater than L1, then process **300** can set an indication that a predicting model cannot be generated for the current case and process **300** can be terminated **330.** If the value of CntL is smaller than L1, then process **300** returns to block **310** and execute another cycle of the loop for generating a predicting model.

Before executing the next loop, some embodiments of PMG **125** (FIG. 1) may be configured to change one or more parameters that were used in a previous cycle. Parameters such as but not limited to the value of TH1 or L1, for example. Some embodiment of process **300** may modify the criteria for defining **310** a feature as a predictive-feature. An example embodiment of process **300** may reduce the amount of dissimilarity of a certain feature in order to increase the number of predictive-features, etc.

In cases in which a certain predicting model fit two or more types of cargo, then at block **312** features, which can be used for both types, can be marked as interactive features or compound features. In an alternate example embodiment of process **300,** at end of block **326,** the PMG creates L1 predictive models. In such embodiments, the L1 predictive models can be ensemble into a single predictive model which is a weighted average of the L1 models.

**FIG. 4A** illustrates a flowchart with relevant processes of an example of method **400.** An example of method **400** can be implemented by LAU **126** (FIG. 1) for analyzing whether a FTDL that is related to a certain CSU is for justified loss (a valid FTDL), for example. Method **400** can be initialized **402** by LAU **126** (FIG. 1) upon receiving a new SFTDL.

After initiation, process **400** may scan **404** the Predicting-Models DB **122** (FIG. 1) looking for a relevant predicting model. The relevant predicting model can predict the probability (likelihood) that the new SFTDL is for a valid loss (a valid FTDL). The relevancy or can be based on the type of cargo, segments, carriers, locations, dates, weather, type of CSU, etc. of the related journey. If **410** a relevant predicting model may not found in the Predicting-Models DB **122** (FIG. 1), then LAU **126** may instruct **412** PMG **125** (FIG. 1) to generate a relevant predicting model that can be used for the entire journey (Pe).

Next, LAU **126** may wait **414** to obtain the relevant predicting model. Upon obtaining the relevant predicting model LAU **126** may proceed to block **416** for calculating and storing the value of the probability (Pe) that the relevant SFTDL is valid. The calculated Pe is related to the entire journey. The calculated probability can point on the likelihood that the FTDL is a valid FTDL.

Returning now to block **410,** if a relevant predicting model was found in Predicting-Models DB **122** (FIG. 1), then process **400** may proceed to block **416** for calculating and storing the value of Pe and then process **400** may proceed to block **420.** At block **420** a decision is made whether the calculated value of Pe is greater than a threshold TH2. If **420** the value of Pe is not greater than TH2, then an indication that the relevant FTDL is suspected can be added **422** to the relevant SFTDL and LAU can proceed to block **442.** The value of TH2 can be few tens of percentages. An example range of values for TH2 can be between 20%-60%. A common value for Pe can be 40%, for example.

If **420** the value of Pe is greater than TH2, then an indication that the relevant FTDL is valid can be added **424** to the SFTDL and LAU **126** (FIG. 1) can proceed to block **430** looking for one or more segments to which the current FTDL can be associated.

Based on the assumption that damage to a certain type of cargo depends mostly on the type of the cargo some embodiments of LAU **126** (FIG. 1) may use the same predicting model (Pe) for predicting the probability that there will be damage (and, consequently, that a FTDL will be filed per a segment of that journey). Other example embodiments of LAU **126** (FIG. 1) may ask PMG **125** (FIG. 1) to deliver a predictive model that can predict the probability that there will be a damage (and, consequently, that a FTDL will be submitted at the end of a certain segment (i), Pi for segment (i) of the journey).

In some cases, the segments can be identified based on data from the Journey DB **111** (FIG. 1). In other cases the LAU **126** (FIG. 1) can be configured to define the segments based on the reading from a timing sensor that is associated with that CSU, other embodiments of LAU **126** can be configured to define the segments based on analyzing the readings of the sensors and compare them to an index that associate reading of different sensors to a certain type of carrier. Each type of carrier can be associated with unique range of vibration, acceleration, shocks, etc.

At block **430** a loop can be initiated between blocks **430** to **440.** Each cycle of the loop (i) can be associated with one of the segments (segment i). At block **432** reading of the sensors that are related to the relevant segment are retrieved and are placed **432** in the relevant predicting model. The probability (Pi) that a FTDL may be filed at the end of that segment is calculated **432** and be stored **434** as Pi in a table. Then the value of Pi can be compared to a threshold TH2i. In some embodiments TH2i can have the same value of TH2.

At block **436** a decision is made whether the value of Pi is greater than the value of TH2i. If **436** the value of Pi is not greater than the value of TH2i, then a decision is made **440** whether there is an additional segment. If **440** yes, then process **400** returns to block **430** for calculating the Pi of the next segment. If **440** there are no additional segments, then process **400** proceeds to block **442.**

If at block **436** a decision is made that the calculated Pi is higher than the value of the relevant threshold Th2i. If **436** yes, then an indication that the relevant segment (i) can be associated with the current FTDL and process **400** may proceed to block **440.** In some embodiments, the indication can be added to the SFTDL before transferring the SFTDL to a surveyor. The indication whether the FTDL is valid or not can be used by the surveyor as an additional tool.

At block **442** the indications whether a filed FTDL is valid and the relevant one or more segments can be presented **442** to the user and be stored in the history DB **123** then process **400** can be terminated **450.**

Figure 4B schematically illustrates a flowchart showing relevant actions of a causes-analyzer-task **4000.** The causes-analyzer-task **4000** engages PMG **125** (FIG. 1) and LAU **126.** The PMG **125** (FIG. 1) can generate a predicting model that can predict one or more causes for certain damage while the LAU **126** (FIG. 1) can be configured to implement the generated model in order to identify the cause for the damage/loss. Other example embodiments of the disclosed technique may use two separated processes. The first one can be a process for creating a predicting model per each cause and the second process can be implemented for pointing on suspected reasons for the damage.

After initiation **4002,** process **4000** may scan **4004** the HDB **123** (FIG. 1) looking for entries that are related to journeys in which a FTDL was filed and the entry also includes indication about the cause for that damage. Those entries are copied **4004** to a temporary database 5 (TempDB5) and a list of causes for damages can be created.

The TempDB5 and the list can be transferred toward PMG **125** with an instruction **4006** to generate a predicting model or a classifier model per each cause from a group of reasons (causes) for damages/losses. Upon getting the plurality of predicting models (one per each possible cause) a loop between block **4010** to **4040** can be initiated. Each cycle (k) of the loop can be associated with a suspected cause for the damage.

At block **4012** readings of the sensors and other parameters that are related to the current FTDL are placed in the predicting model that is related to the current cause (k) and the probability that the damage was generated by the current cause is calculated **4012** and be stored **4014** as Pk in a table. In other words, the value of the calculated probability (Pk) indicates the likelihood that the cause (k) is one of the reasons for the damage.

Next the value of Pk is compared **4022** to a threshold TH3. Some embodiments of the disclosed technique may use a plurality of thresholds, one for each cause (Pk). The different values can depend on the type of cause, on the type of cargo, etc. TH3 can be in the range of 10-60 %, for example. A common value of TH3 can be 30 %, for example.

If **4030** the value of Pk is greater than Th3, then in block **4034** an indication can be set that the cause (k) is a suspected reason for the damage. If **4030** the value of Pk is smaller than Th3, then in block **4032** an indication can be set that the cause (k) is not a suspected reason for the damage. Next, a decision is made **4040** whether there is an additional suspected cause. If yes, process **4000** returns to block **4010** and executes the next cycle of the loop.

If **4040** there are no additional causes, then at block **4042** the indications about the possible causes can be stored **4042** in the relevant entry of the HDB **123** (FIG. 1) and a report can be delivered **4042** to the user. Then process **4000** can be terminated **4050.**

In some example embodiments of the disclosed technique, process **4000** can be modified to include three or more indications. Indications such as but not limited to: a suspected cause, almost a suspected cause, most likely suspected cause, etc.

FIG. 4C illustrates a flowchart with relevant processes of another example of a method **4100** that can be used to point on one or more possible causes for the damage of a valid FTDL. An example of method **4100** can be implemented by an example of LAU **126** (FIG. 1). Method **4100** can be initialized **4102** by LAU **126** (FIG. 1) upon receiving a new SFTDL.

After initiation **4102,** process **4100** may scan **4104** the Predicting-Models DB **122** (FIG. 1) looking for one or more relevant predicting models. The relevant predicting model can predict the probability that a certain cause is a suspected one. The relevancy or similarity can be based on the type of the cargo, dates, weather, type of CSU, etc. If **4110** a relevant predicting model cannot be found in the Predicting-Models DB **122** (FIG. 1), then PMG **125** (FIG. 1) can be instructed **4112** to generate one or more predicting models. Each predicting model can be used to predict the probability that the current cause can be one of the reasons for the relevant damage, a possible cause.

Next, process **4100** may wait **4114** to obtain the relevant one or more predicting models. Upon obtaining **4114** the relevant predicting model process **4100** may proceed to block **4120** and initiate a loop between block **4120** and block **4130.** Each cycle of the loop (i) can be associated with one of the possible causes (i). At block **4122** reading of the sensors are retrieved and be placed **4112** in the current predicting model (i). The probability (Pi) that the current cause can be a reason for the damage is calculated **4112** and be stored **4124** as Pi in a table. In addition the value of Pi can be compared to the value of a threshold TH3i. In some embodiments TH3i can have the same value for all possible causes.

At block **4126** a decision is made whether the value of Pi is greater than the value of TH3i. If the value is greater, then an indication is set **4128** that cause (i) may be related to the valid FTDL. Thus, that cause (i) can be one of the reasons for the damage which is indicated in the current FTDL. And process **4100** proceeds to block **4130.** In other words, the value of the calculated probability (Pi) indicates the likelihood that the cause (i) is one of the reasons for the damage/loss.

If **4126** the value of Pi is not greater than the value of TH3i, then a decision is made **4130** whether there are additional possible causes. If yes then process **4100** returns to block **4120** and start a new cycle.

If **4130** there are no additional causes, then process **4100** proceed to block **4132** and the indications about possible one or more causes can be presented **4132** to the user and be stored in the history DB **123.** Next process **4100** can be terminated **4140.**

Referring now to **FIG. 5A** that illustrates a flowchart showing relevant processes that can be used by method **500.** Method **500** can be implemented by an example of operational-recommending-unit (ORU) **128** (FIG. 1) for calculating the impact of each Parameter-Of-Interest (POI) on a journey. The POI can be a cost of the journey for the carrier. Also, the POIs could be technical parameters, for example, locations along alternative routes between the origin and the destination, a routing path, a location, a set or a certain temperature, a duration of the journey, etc.

Method **500** can be implemented per a defined target. The defined target can be values of one or more technical features, which are critical to the condition of the cargo. For example, the range of temperatures, acceleration above a certain threshold, vibration (amplitude and frequency), the duration of the journey, etc. In addition, the defined target can include other features, such as a cost of journey for the carrier, etc.

Process **500** can be initiated **502** by obtaining a request from a user, for example, to get a recommendation for a route from an original to a destination. The user may define the target that is relevant for that cargo and a list of one or more risk factors that are relevant for the recommendation. The user can be a shipper, a consignee, a carrier, etc.

At block **504** the defined target is obtained and process **500** may scan the historical DB **123** (FIG. 1) looking for entries that are related to alternative journeys between the relevant two ends (the origin and the destination of that journey). Those entries can be copied to a temporary database 3 (TempDB3). Then a loop can be initiated between block **506** to block **520.** Each cycle in the loop can be associated with a POI.

At block **506** the data of TempDB3 can be divided into two groups. The first group contains journeys that include the current POI and the second group contains journeys that do not comprise the current POI.

Next, a predictive model can be generated **508** per each group and per each defined target. One predictive model can predict the probability that the defined target can be reached in a journey with that POI and the other predictive model can predict the probability that the defined target can be reached in an alternative journey without that POI.

At block **510** the probability to reach the defined target with the current POI can be calculated using the appropriate generated predictive model. In addition, the probability to reach the defined target in a route without the current POI can be calculated **510** by using the other generated predictive model.

The impact of the current POI on the probability to reach the defined target can be calculated **512** as the difference between the two values of the probabilities that were calculated in block **510.** At block **514** the statistical error of the estimation can be calculated. Some example embodiments of the disclosed technique may use standard deviation as the statistical error. Other embodiments may use other type of statistical error. The impact and the statistical error that related to the current POI can be stored **516** in a computer readable memory device that is associated with ORU **128** (FIG. 1). An example of computer readable memory device can be a read/write hard disc, CDROM, Flash memory, ROM, or other memory or storage devices.

Next, a decision is made **520** whether additional POI exists. If **520** there is additional POI, then the next POI is selected **522** and process **500** returns to block **506** for calculating the impact of the next POI. If **520** there is no additional POI, then process **500** may present **524** the stored calculated impacts and the statistical errors that were calculated per each POI.

The presentation can be executed as a table in which the rows represent alternative journeys between the original and the destination and each column represents a POI along that journey. The impact and the statistical error can be written in the appropriate cells of that table. The table can be printed or displayed **524** to the user and process **500** can be terminated **526.**

FIG. 5B schematically illustrates a flowchart of method **5000** that can be implemented by an example of operational-recommending-unit (ORU) **128** (FIG. 1). Method **5000** can be executed per a defined set of filters and per a list of one or more of risk factors. The set of filters may comprise of a combination of type of cargo, location, season of the year, a type of CSU, etc. The list of risk factors can comprise a plurality of possible risks. An example of a list can comprise: temperature above 50 Celsius degrees for at least 30 min; acceleration above 8g, humidity above 70%, etc.

Process **5000** can be initiated **5002** by obtaining a request from a user, for example, to get a recommendation for handling a certain cargo. The user may define **5004** the relevant set of filters and the list of risk factors. The user can be a shipper, a consignee, a carrier, etc.

At block **5006** the HDB **123** (FIG. 1) can be scanned and entries that are associated with the defined set of filters can be copied to a temporary DB 6 (TempDB6). In some embodiments a link per each entry of those entries can be copied to TempDB6. At block **5008** the TempDB6 can be scanned and entries that are not associated with occurred damages can be removed from TempDB6.

Next a loop between block **5010** and **5020** can be initiated. Each cycle of the loop can be associated with a certain risk factor from the obtained list of risk factors. At block **5012** the TempDB6 can be transferred toward a queue of PMG **125** (FIG. 1) with a request to generate a predicting model that can predict the contribution of the current risk factor to the occurred damage.

Upon obtaining the requested predicting model from PMG **125,** the contribution of the current risk factor and the statistical error of the estimation can be calculated **5014.** The calculated probability and the statistical error can be stored **5018** in a memory device that is associated with ORU **128** (FIG. 1). Next a decision is made **5020** whether additional risk factors are included in the list of risk factors. If **5020** yes, then process **5000** returns to block **5010** for handling the next risk factor. If **5020** not, then the stored results can be presented **5024** to the user.

Some example embodiments may use **5024** a table in which each row is associated with a define set of filters and each column is associated with a risk factor. Thus, each cell of the table can present **5024** the calculated probability to reach the relevant risk factor for the relevant set of filters as well as the associated statistical error. After presenting the results process **5000** can be terminated **5026.**

Referring now to FIG. 6 that illustrates a flowchart showing relevant actions of an example of recommending process **600.** Method **600** can be implemented by an example of operational-recommending-unit (ORU) **128** (FIG. 1) for calculating the impact of each alternative routes between an original place and a destination. Method **600** can be initiated **602** by ORU **128** (FIG. 1) and be executed per a defined journey.

At block **604** the historical DB **123** (FIG. 1) can be scanned looking for entries that are related to alternative plans for a journey between the origin and the destination of the relevant journey. A plan of a journey can comprise technical data. For example, these data can be the points of origin and destination, the loading plan of the CSU, the duration of stops at each port, etc. In addition, it can include costs of the journey for the carrier, etc. Those entries can be copied **604** to a temporary database 4 (TempDB4).

Next, the first alternative plan can be fetched **606** from TempDB4 and the impact of each one of POIs along this route can be obtained **610** from the data that was stored by method **500** as it is disclosed above in conjunction with block **516** (FIG. 5A). In the present disclosure the terms "route of a journey" and "plan of a journey" can be used interchangeably.

Next, the obtained **610** impacts of each of the POI along the current alternative plan is statistically accumulated as random variables **612** and the sum can be stored **612** in a table. Each row of the table can be associated with an alternative plan and the column can be associated with the sum of impacts. At block **620** a decision is made whether additional alternative plans exist in TempDB4. If **620** there is an additional alternative plan, then process **600** may select **622** the next alternative route and returns to block **610** for handling the impact of the next alternative route.

If **620** there are no alternative plans, then process **600** may present **624** the stored calculated impacts of each one of the alternative plans. The presentation **624** can be implemented by a table in which the rows represent alternative plans of a journey between the original and the destination. Each column can present the impact that is associated with that plan. The table can be printed or displayed **624** to the user and process **600** can be terminated **630.**

Fig. 7 schematically illustrates a flowchart showing relevant processes that can be implemented an example embodiment of method **700.** Method **700** can be initiated **702** by an example of a risk-analyzer unit (RAU) **127** (FIG. 1) for determining the risk that is involved in a certain journey for a certain type of cargo. At block **704** method **700** may lead the user to load the RAU **127** with the features of the journey. The features of the journey may comprise such technical features as cargo information, the locations of the original and destination, carriers, period of the year, etc. The cargo information may comprise sensitivity to shocks, sensitivity to vibrations (amplitude and frequency), sensitivity to temperature, sensitivity to humidity, sensitivity to water, etc.

Next, information, which is relevant to the certain journey and the certain cargo, can be obtained **706** from the external DBs (DB **111** to DB **118** of FIG. 1). The information can comprise information about the weather, possible storms, the type of CSU, etc. In addition common readings from the relevant one or more sensors (sensors similar to the sensors that are associated with the current CSU) can be retrieved **706** from the historical DB **123** (FIG. 1).

At block **708** a predicting model for predicting whether a loss is likely to occur, can be fetched from predicting model DB **122.** The fetched predicting model was generated for a relevant journey and relevant type of cargo. The similarity or relevancy can be based on type of cargo, segments, carriers, locations, dates, weather, etc. Next the collected features that were obtained in blocks **704** and **706** can be placed in the fetched predictive model in order to calculate **710** the probability for damage occurrence in the entire journey and per each of the relevant segments. The value of the calculated probability points on the likelihood that damage may occur.

Then, the results can be presented **712** by a table in which the first row represent the entire journey and the following rows represent one or more segments of that journey. The column represents the calculated risk. Thus, each cell in the table stores the risk that is associated with the relevant location. The table can be printed or displayed **712** to the user and process **700** can be terminated **720.**

In the description and claims of the present disclosure each of the verbs: "comprise", "include" and "have", and conjugates thereof, are used to indicate that the object or objects of the verb are not necessarily a complete listing of members, components, elements, or parts of the subject or subjects of the verb.

The present invention has been described using detailed descriptions of embodiments that are provided by way of example and are not intended to limit the scope of the invention. The described embodiments comprise different features, not all of which are required in all embodiments of the invention. Some embodiments of the present invention utilize only some of the features or possible combinations of the features. Many other ramification and variations are possible within the teaching of the embodiments comprising different combinations of features noted in the described embodiments.

It will be appreciated by persons having ordinary skill in the art that the present invention is not limited by what has been particularly shown and described herein above. Rather the scope of the invention is defined by the claims that follow.

## Claims

1. A computer readable memory device comprising executable instructions that when executed cause a processor, at an operational recommending unit (ORU):
i. to obtain information regarding two or more alternative routes between an origin and a destination of a certain journey of a cargo-shipping-unit, CSU, wherein the information is obtained from a plurality of databases;
ii. to obtain a defined target, wherein the defined target comprises values of one or more features, which are critical to the condition of the cargo that is carried by the CSU;
iii. to calculate an impact of each alternative route on a probability to reach the defined target;
iv. to present the impact of each alternative route on the probability to reach the defined target; and
v. to recommend, based on the presented impact, one of routes from the two or more alternative routes to be used for the certain journey of the CSU.

2. The computer readable memory device of claim 1, wherein the executable instructions further comprising instructions when executed cause the ORU to associate each route from the two or more alternative routes to a plurality of parameters of interest (POI).

3. The computer readable memory device of claim 2, wherein the impact of each alternative route is calculated per at least one POI from the plurality of POIs.

4. The computer readable memory device of claim 1, wherein the defined target is a range of temperatures.

5. The computer readable memory device of claim 2, wherein the calculated impact that is associated with the at least one POI is related to the difference between the probability to achieve the defined target in a route with that POI and the probability to achieve the defined target in a route without that POI.

6. The computer readable memory device of claim 2, wherein the plurality of POIs comprises the duration of the certain journey.

7. The computer readable memory device of claim 2, wherein the plurality of POIs comprises the humidity in the CSU.

8. The computer readable memory device of claim 1, wherein at least one route is implemented by a vehicle.

9. A system comprising:
a. an operational recommending unit (ORU) that is communicatively coupled with one or more databases (DBs);
b. wherein the ORU is a processor that is configured:
i. to obtain information regarding two or more alternative routes between an origin and a destination of a certain journey of a cargo-shipping-unit (CSU), wherein each route comprises at least one segment, and wherein the information is obtained from a plurality of databases;
ii. to obtain a defined target, wherein the defined target comprises values of one or more features, which are critical to the condition of the cargo that is carried by the CSU;
iii. to calculate an impact of each alternative route on a probability to reach the defined target; and
iv. to present the impact of each alternative route on the probability to reach the defined target;
v. to recommend, based on the presented impact, one of routes from the two or more alternative routes to be used for the certain journey of the CSU.

10. The system of claim 9, wherein the ORU is further configured to associate each route from the one or more alternative routes to a plurality of parameters of interest (POI).

11. The system of claim 10, wherein the plurality of POIs comprises the duration of the certain journey.

12. The system of claim 9, wherein the defined target is related to temperature.

13. The system of claim 9, wherein the defined target is related to amplitude of vibration.

14. The system of claim 10, wherein the calculated impact that is associated with a POI from the plurality of POIs, is related to the difference between the probability to reach the defined target in a route with that POI and the probability to reach the defined target in a route without that POI.

15. The system of claim 9, wherein at least one segment of the route is implemented by a vehicle.
